# EUROPEAN PATENT SPECIFICATION

(11) **EP 0 892 238 B1**
(45) Date of publication and mention of the grant of the patent: **03.03.2004**
(21) Application number: 98112759.0
(22) Date of filing: 09.07.1998
(51) Int. Cl.: F41A 21/18, B23P 15/00

(54) **Rifled gun barrel**
Gezogener Waffenlauf
Tube de canon rayé pour arme à feu

(30) Priority: 16.07.1997 IT MI971689
(43) Date of publication of application: 20.01.1999
(73) Proprietor: Chiariello, Guido, 25123 Brescia (IT)
(72) Inventor: Chiariello, Guido, 25123 Brescia (IT)
(74) Representative: Robba, Pierpaolo

(56) References cited:
- DE-A- 2 738 783
- DE-A- 3 300 175
- US-A- 2 089 219
- US-A- 3 187 455
- US-A- 3 376 624

## Description

The present invention is generally concerned with launching devices for firearms and particularly with fire arms barrels, and with a process for their manufacturing. More exactly the invention concerns a high efficiency geometry of a barrel for a firearm or a launching device in general as well as a process for its manufacturing.

In the following of this description, for simplicity reasons, reference will be made to the term "firearm barrel" that is to be understood as including launching devices in general.

In more details, the present invention relates to a geometry of a firearm barrel or more generally of a launching device in which all parameters have been suitably proportioned and designed, and chosen in order to obtain a maximum ballistic efficiency, a very high shooting precision, and a considerable increase of the barrels life, with an increase of the number of rounds that can be fired.

The invention is further concerned with a simple and economic process for manufacturing barrels of firearms or launching devices in general, for calibers from 5.5 to 120 mm.

It is known from DE 27 38 783 that barrels for a firearm or a launching device shall be provided with longitudinal helical lands and grooves having curvilinear cross section profiles.

In the modified geometry according to the invention, helical groovings (rifling) extend along the whole length of a firearm barrel and for all calibers, and are substantially shaped with curved profiles of the lands and grooves, that merge into each other with an arc a circle having a given radius, along tangent lines, and with such merging radii specifically selected as a function of the caliber, of the pressure exerted by the combustion gases of the propellant charges and of the friction conditions between the barrels and the projectiles (or bullets) discharged therefrom.

It is known that present firearm barrels and more generally the so-called projectiles launching devices using the gas pressure coming from the combustion of a propellant charge, are provided with substantially helical groovings either solid groovings (lands) or empty groovings (grooves) to impart the projectile or bullet a high rotational speed around its axis that can guarantee a stable trajectory, according to the well known gyroscopic effect.

It is also known that such rifling is presently made by cutting substantially helical narrow furrows along the whole length of the firearm barrels, that extend from the effective diameter of the barrel longitudinal bore towards the outside of the barrel, that is with a larger diameter than the starting one. Said lands and grooves have a cross section profile of a substantially trapezoidal shape. In practice each plurality of grooves of each barrel is shaped like a narrow furrow, whose cross section extends into the metallic portion, starting from the bore, up to a predetermined increased diameter, and the connections of the two ends of the different diameters are obtained by means of simple inclined walls.

This type of construction, although suitable to produce the desired stabilising gyroscopic effect in the fired projectiles, presents nonetheless a few lacks and/or limitations.

Particularly, the presently used cross section geometry and the starting and final cross sections of the firearm barrels have the drawback of a rather small ballistic efficiency and are subject to a quick wear particularly along the blending edges between the grooves and the barrel inner diameter, on the side corresponding to the direction of the rotary motion imparted to the projectile, usually clockwise.

As it is well known, firearm barrels and launching devices in general for projectiles exploiting the pressure exerted by the combustion gases of propellant charges, are obtained from the so called "bars", of alloyed high quality stainless steel, already hardened and tempered, obtained by rolling or by forging depending on the diametral dimensions (De) and the length (Lo) of the various calibers.

A known process for manufacturing these barrels substantially provides for drilling a longitudinal bore having a diameter (Di) larger than the maximum diameter of the combustion chamber (Cc), and subjecting the steel bar to the following treatments in this sequence:
lead covering or inside polishing with mineral oil and abrasive stones, in order to impart the bar the required roughness (not higher than 0.8 micron Ra);
external machining by turning in order to obtain the desired dimensions and the external tolerances; cold hammering of the inside of steel bar and the combustion chamber;
machining by turning of the barrel external profile in order to take barrel to the final dimensions, and possible inside chrome plating for the core and the chamber of combustion.

This process although successfully from the industrial point of view, is not without drawbacks mainly due to the long times required, to its cost that remarkably affects the final product and to the harmfulness of the products used in the various production stages.

Process harmfulness is due both to lead vapors developed during the lead covering, and to the mineral oils used during polishing and turning, as well as to the inside chrome plating process.

Polishing is generally carried out in three consecutive steps (rough machining, pre-finishing and finishing) with quite long work times and a high percentage of defective products owing to breaking of the used stones and of the stone holders with a consequent damage of the inner diameter of the bar. Also mineral oil consumption for all these operations is very high. Water-oil emulsions used for cooling the tools have an unpleasant smell, cause environment pollution and growth of bacteria, mold, viruses, and cause dermatitis even when adequate protection means are employed. Besides, the manufacturing has a high tool consumption owing to breaking and splintering of the cutting tools.

It is an object of the present invention to eliminate or to reduce the above described drawbacks and limitations.

The above objects are achieved by means of a barrel as claimed in claim 1 and a process as claimed in claim 7. Further advantageous features are recited in the dependent claims.

According to a first aspect, the invention eliminates the above mentioned drawbacks by using a geometry for a firearm barrel or a launching device in general having a plurality of longitudinal helical lands and grooves, in which said grooves have a curved profile in cross section.

A firearm barrel in accordance with the present invention, as seen in cross section, provides for a circumference corresponding to the inner drilling diameter, on which circumference cavities are present that helically extended for the whole length of the barrel. The so formed helical grooves are in a predetermined given number and are equally spaced from each other by the land portions of the same barrel.

In a cross section view such cavities join the side tangent points of the land intermediate parts through curved sections with proper radii, and such intermediate parts are in turn portions of circumferences that are substantially tangent to the inner diameter of the barrel at its medium point. Besides, in a firearm barrel of the present invention, the end parts of the barrel hole corresponding to the muzzle opening and to the inner diameter of the first cone of the combustion chamber, smoothly blend with the diameter of the helical inner grooves.

The advantages achieved through the barrel geometry of the present invention mainly consist of a considerably increased ballistic efficiency, with improvements that can also be in the order of 300% or more, a drastically reduced barrel wear, allowing to fire a number of rounds that is 4 - 5 times higher than that possible at present, with the same materials and calibers. Besides, the back pressure produced by propulsive gases at the muzzle when the projectile leaves the barrel is substantially reduced. The projectile upsetting when it enters the combustion chamber, is also reduced to substantially negligible levels.

According to another aspect, the present invention realizes a manufacturing process of a firearm barrel equipped with a plurality of helical longitudinal lands and grooves having a curvilinear cross section profile, tangentially merging to each other in cross section by arcs of given curvature radii, such barrel having a low cost, not requiring a high consumption of mineral oil, and with the process that is not harmful to workers and to the environment and does not require a tools regrinding.

In its most general aspect, the present invention provides to replace the lead covering and/or polishing with an operation of ogive bore machining with a thrust or of bore machining with a thrust using carbides; by accomplishing dry turning operations (without emulsions and/or lubricants) using hard metal or carbide tools, and treating the steel bar - after a hammering operation - with a heat cycle for stress relieving.

The invention will now be described with more details in the following, by referring to the Figures of the attached drawings that illustrate a few exemplary and not limiting embodiments, and in which:
Figure 1 is a cross section along line A-A of Fig. 2 of a firearm barrel of the present invention, showing the main parameters and the geometrical configuration;
Figure 2 is a partial longitudinal cross section view of the firearm barrel of Figure 1 showing a portion of a helical groove;
Figure 3 is a schematic partial longitudinal cross section view of the muzzle of a firearm barrel of the present invention;
Figure 4 is a schematic partial longitudinal cross section view of the combustion chamber of a firearm barrel of the present invention; and
Figure 5 is a schematic cross section view of a tool used in ogive machining to boring with thrust (ogive or button) that can be used in the process of the invention.

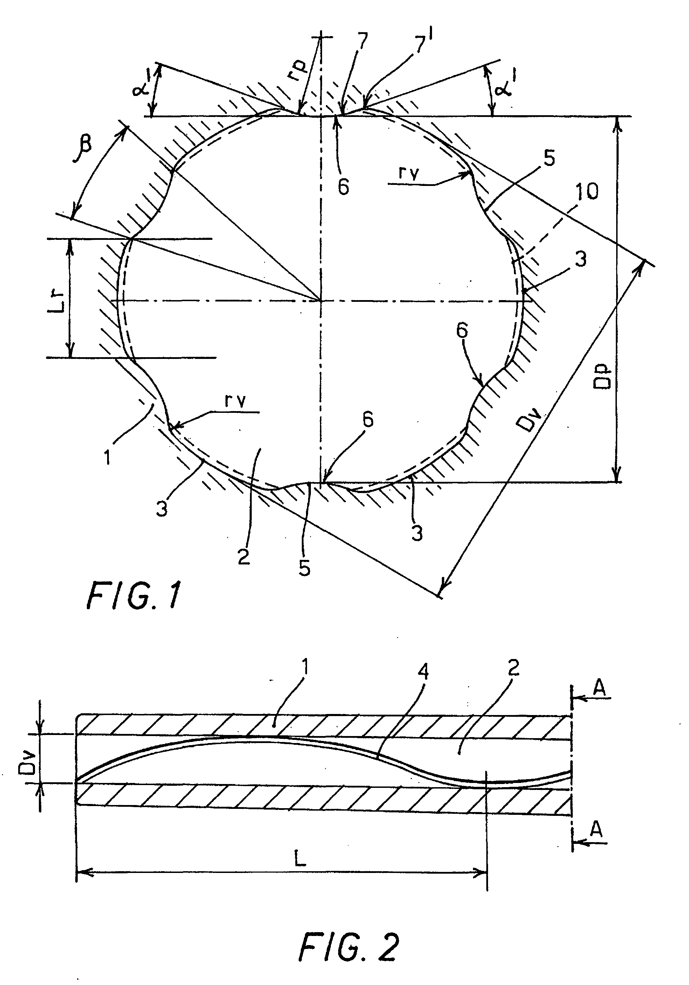

With reference to Figures 1 to 4, these illustrate a geometry of a high efficiency firearm barrel 1, in which, on the circumferential surface of the barrel central hole 2 over which a fired projectile 10 travels, cavities are formed as inwards extending lands 5 and outwards extending grooves 3, helically extending for the whole length of the barrel with a predetermined pitch "L". Both the lands 5 and the grooves 3 have curved profile cross section that are circle arcs.

Cavities 3 extend from the average diameter Dp of the lands 5 into the metal up to the average diameter Dv of the grooves 3. Said diameters Dp and Dv are functions of the number of the grooves, as well as of the arm type and caliber.

Calibers are generally in the range between 5.5 and 120 mm and the ratio of the average diameters Dv/Dp is larger than 1, and preferably is comprised between 1.01 for the larger calibers and 1.04 for the smaller calibers.

Proportionally to same functions, each groove 3 has a width Lr. The angle β subtending the arc of a land 5 on the circumference of hole 2 is designed as a function of the length Lr and the number of rifling grooves.

The cross section shape of the above mentioned lands 5 is that of a circle arc 6 with a predetermined radius rp. As a function of such radius rp and of the type of the cavity 3, output angles α' are determined, and the arc ends tangentially merge with the adjacent grooves 5 through arcs having a predetermined curvature radius rv.

The above referred parameters depend on the type of the launching device, its caliber and the propellant charge, the number of rifling grooves 4, and the pitch "L" of said helical grooves 4, the axial, tangential and angular speeds to be imparted to the projectiles during their travel along barrel 1 and/or at the muzzle output and in the several sequences, the friction resistances and of force components acting in the firing dynamics. Preferably, the ratio (Dv/Lr) of the average diameter Dv to the width Lr of the grooves is comprised between 3 and 18, and depends on the barrel caliber. The ratio (L/Dp) of the helical pitch "L" of the grooves 4 to the average diameter Dp of the lands 5 is comprised between 20 and 60 as a function of the barrel caliber. The ratio (Dp/rp) of the average diameter Dp to the radius rp of the lands 5 is comprised between 2 and 28 as a function of the barrel caliber. The ratio (Dp/rv) of the average diameter Dp of the lands 5 to the radius rv of the grooves 3 is comprised between 50 and 300 as a function of the barrel caliber. In firearm barrels having the above specifications and parameters, the wearing action of the fired projectiles 10 is not exerted on the cavity output edges of the grooves, as it happens in actual constructions, but it is exerted along a line 7' tangent to the circle arc profiles 6 of the lands 5. With time this line is subjected to wear and moves towards the line 7 on the same curved surface. As a result, the wearing action can be withstood for a longer time, allowing to fire a larger number of rounds 10, without either worsening or increasing the diameter Dp. This profile, without sharp edges that are more prone to be worn, is substantially less subject to surface roughness, both for the construction and for the wearing effects, and allows for a considerable improvement of the ballistic efficiency.

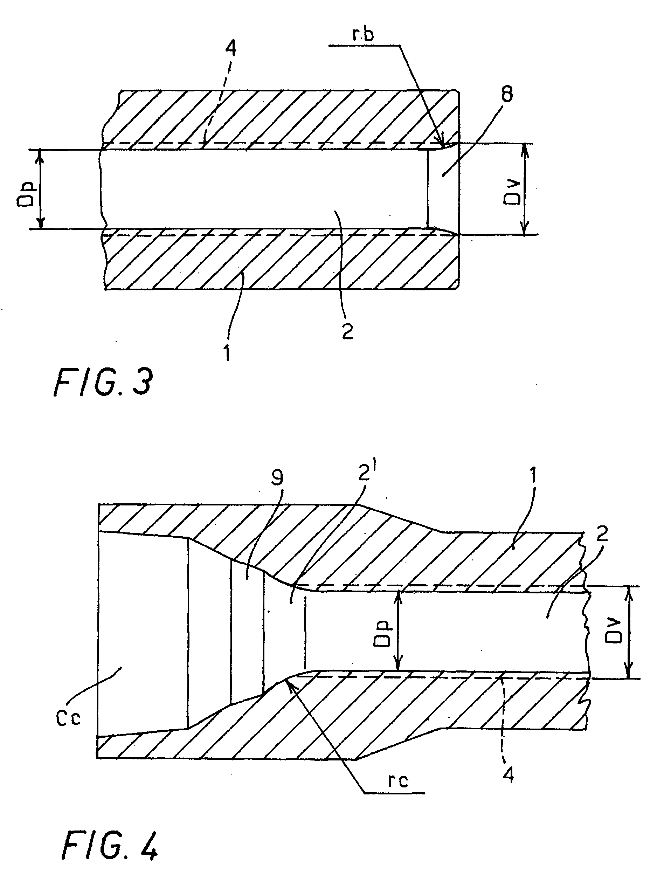

Figures 3 and 4 show corrective actions on the end parts of firearm barrels or launching devices adapted to improve their efficiency or average life. The muzzle 8 of the barrel 1 is circumferentially profiled with a merging radius rb that is related to the arm caliber and extends from the inner diameter Dp of the lands to the outer maximum diameter Dv of the grooves.

Preferably, the ratio (Dp/rb) of the arm caliber, i.e. the average diameter Dp of the lands 5, to the merging radius rb is comprised between 0.2 and 0.5. This means that in the area of the barrel end, cavities 3 are progressively changing so as to allow an expansion towards outside of the propulsive gases when the projectile 10 leaves the barrel, without causing any dragging effect on them, due to a back pressure or turbulence.

In the area of the first cone 9 of the combustion chamber Cc a circumferential connecting portion with a merging radius rc is provided, between the base of the cone and the average diameter Dp of lands 5 at the same cross sections. The radius RC of this circumferential merging portion is a function of the arm caliber or of the average diameter Dp of the lands 5, and preferably the ratio Dp/rc varies from 0.3 for smaller calibers to 0.6 for the larger ones.

The merging portion with radius rc has the purpose of forming a progressive entrance facility to the fired projectiles coming from the combustion chamber Cc and pushed into the barrel core 2. This way the projectiles 10 are progressively pushed along the barrel by the propellant charge, thus reducing to a minimum the well known upsetting effect of the known firearms or similar devices, which is one of the most important limitations to the number of rounds the arm cam shoot because of the not negligible wear of the cone 9.

In the following the process according to the invention for manufacturing a firearm barrel will be disclosed with more details.

The process comprises the following steps:
- producing a bar of a high quality alloy steel already hardened and tempered, through rolling or forging, with a diameter and a length depending on the barrel model and caliber;
- drilling said steel bar with a through hole having an inner diameter (Di) substantially equal to the maximum diameter of the combustion chamber (Cc);
- ogive shape boring with thrust the inner diameter (Di) of the hole by using horizontal broaching machines with ogives of "Ferro-Tic" (Tic-iron) or hard metal, for barrels having a diameter between 5.50 and 12 mm, or boring with thrust the inner diameter (Di) using a numerical control (N.C.) drilling equipment with carbide inserts, for larger calibers up to 120 mm;
- dry external turning the steel bar by using a N.C. lathe with inserts of hard metal or carbides;
- cold hammering the core steel bar and the combustion chamber by using hammering machines with hammers of hard metal suitable for compression and forming pin in hard metal, depending on the barrel type and caliber.

The further following stages are optional:
- possible controls in order to check the geometric shape, the roughness, the combustion chamber profile, the presence of possible defects such as microcracks, dimensions and tolerances both of the core and the combustion chamber;
- heat treating for stress relieving the cold hammered steel bar, placed in a vertical position, and
- turning the external profile of the hammered steel bar, finishing the end part with dimensions and tolerances according to the barrel model to be manufactured, and finishing the muzzle end.

All these operations are carried out in a dry environment and using tools of hard metal or carbides.

The heat treatment for stress relieving is carried out by heating the bar to a temperature of about 550-650°C, in an inert atmosphere, for about 4 hours, and slow cooling it in an oven, with the bars in a vertical position.

Barrel thus made can undergo conventional checking operations, firing test, decopperizing and inside washing, sanding, parkerizing, external heat lacquering, and internal, external and dimensional control, according to a test cycle programmed in relation to the features requested by the finished product.

The steel used for producing the steel bar is an alloy hardened and tempered steel having a good malleabilty suitable to be subjected to a cold forming/hammering process. Particularly preferred is a medium steel, already hardened and tempered, well known in the market as "R3B", and manufactured by Terni company or other manufacturer and having the following characteristics:
Ultimate tensile stress: 85 - 100 kg/mm²;
Elastic limit: at least 70 kg/mm²;
Elongation: 10-15%.

The steel bar is obtained from rolled bars having an outer diameter (De) and a length (Lo) that are related to the barrel caliber to be manufactured, for calibers between 5.5 and 20 mm. For barrels having larger calibers, between 20 - 120 mm, it is preferable to use preforms or intermediate forgings, already hardened and tempered, with the above given specifications.

After cutting the bar or the rolled bar (preform), the steel bar goes through facing operations and to dimensioning as a function of the model and caliber of the barrel to be manufactured, in dry conditions, without lubricants, with the use of hard metal, carbides or CERMET inserts, such as those made and marketed by various companies for example by SECO, SANDY, SUMITOMO ETC.

The steel bar is then longitudinally drilled using numerical control drilling machines with tools with heads having hard metal inserts, and a forced lubrication at about 40 - 80 bar. Lubrication is carried out by using a mineral oil without any polluting substance. Mineral oil is recovered by means by centrifugation of the swarfs and is recycled.

The ogive or button for shape boring with thrust replaces the boring operation and, as a consequence, eliminates the costs of regrinding the boring tools and the use of oil emulsions for lubrication.

The ogive shape boring operation with thrust is advantageous for barrels having a caliber up to 12 mm; for larger calibers it is preferable to carry out the boring operation with thrust by using numerical control drilling machines with titanium carbide or CERMET inserts and lubrication under pressure at about 60 - 90 bar, in order to allow swarfs output during boring operation with thrust. The ogive shape boring operation with thrust is carried out by means of horizontal broaching machines with tools either of "Ferro-Tic" or of hard metal and with a thrusting rod. The lubricant used is preferably an antiscuff oil of molybdenum sulphide.

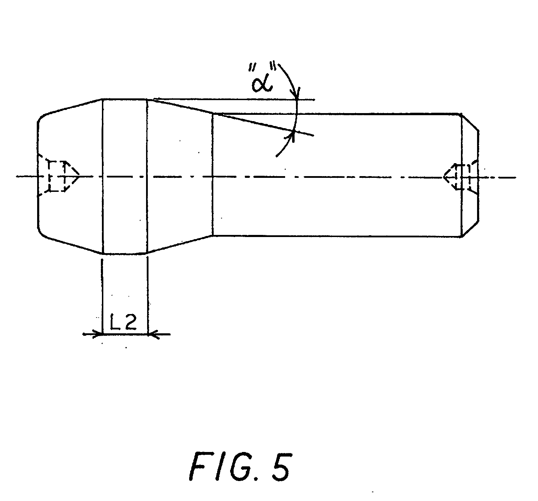

Figure 5 is a schematic view of a cross section of a type of tool for the ogive boring operation with thrust (ogive) that can be used in the process of the present invention.

General dimensions, angles and various dimensions depend on the caliber of the barrel to be made and on the steel used. Thus, for example, for medium steels, the forming angle (α) is larger than that used for hard steels; similarly the length (L2) of the boring diameter is a function of the hardness of the steel used, and it is smaller for medium steels.

The subsequent operation of external turning the steel bar is carried out in a dry environment, without emulsions or lubricants, preferably in a safety sealed room. The turning process is preferably controlled by means of electronic probes checking the outside diameter (De) and with an automatic control for correcting the turning dimension and their tolerances.

The next hammering step of the steel bar is carried out in a cold environment to impart the desired geometry either to firearm barrel or to the core or to the combustion chamber. Possible controls of the steel bar after the cold hammering operation are carried out with the so-called "Contugraf" as far as the control of the rifling geometric shape is concerned, the control of roughness, of the combustion chamber profile, of the cones, the angles, and so on, and with an endoscope for the internal visual inspection. The steel bar cold hammered undergoes a stress relieving heat treatment with the purpose of restoring the elastic limit of the steel hardened by the hammering operation and relieving all the internal stresses produced by permanent deformation of the rifling and the combustion chamber.

Such heat treatment for stress relieving comprises the heating of the hammered steel bar, in a vertical position, to a temperature of 550 - 650°C in an inert atmosphere for at least 4 hours and the subsequent slow cooling in a vertical oven.

After such heat treatment, the external profile of the steel bar is dry turned by tools provided with hard metal inserts. The outlet of the barrel muzzle is then circumferentially profiled with a merging radius (rb) that depends on the firearm caliber and extends from the inner diameter (Dp) of the lands to the outer maximum diameter (Dv) of the grooves, with the ratio Dp/rb ranging between 0.2 and 0.5. Profiling is done in dry environment by means of tools with titanium carbide or CERMET inserts.

The operation following the heat treatment is carried out by the same numerical control (N.C.) lathe by using hard metal or CERMET inserts suitable for the finishing phase in order to obtain a roughness not higher than 0.8 micron Ra. All the turning operations of the steel bar and the external profile, and those of drilling the steel bar can be controlled by a suitable monitoring. Thus, for example, the process can be carried out using an equipment known in the market as "Tool Monitor Coromant" or a monitoring equipment of the firm VALENITE, that accomplishes the operation control by checking the wear/failure of the insert, the tool and/or piece absence, and the shearing stresses acting on the steel bar.

The advantages achieved through the process of the present invention are manifold. First of all, the obtained results are optimal from a quality point of view because the whole inner barrel is completely finished without need of any reworking. Besides, consumption of tools are much reduced and the cost for unit of product is very low because there is no longer the regrinding cost, the work parameters are very high as compared with very high-speed steel tools, with a considerable reduction of machine times, and the lubricating mineral oil consumption is very reduced, with a consequent saving in cost owing to elimination of drained away liquids. Use of carbide or CERMET tools, in the external profile finishing phase, allows to cancel grinding operation of external diameters - for a few barrel models - with tolerances within 0.01 mm max.

From the above description it is evident that the process of the present invention is economically competitive with other well known processes.

Although the present invention has been described with reference to preferred embodiments, various changes can be done by the skilled of the art that will fall within the present invention's teachings. The invention extends to cover all the changes and alternate embodiments falling within the scope of the attached claims.

## Claims

1. A barrel for firearm or launching device provided with a plurality of longitudinal helical rifling lands (5) and grooves (3), the cross section profiles of both said lands and grooves being arcuated, **characterized in that** the side end parts of said lands (5) and grooves (3) are tangentially smoothly connected to each other by arcuated portions formed as circumference arcs of a given curvature radius (rv).

2. A barrel according to claim 1, **characterized in that** the ratio (Dv/Dp) of the average diameter (Dv) of said grooves (3) to the average diameter (Dp) of said lands (5) is larger than 1 and comprised between 1.01 and 1.04.

3. A barrel according to any preceding claim, **characterized in that** the ratio (Dv/Lr) of the average diameter (Dv) to the width (Lr) of said grooves (3) is comprised between 3 and 1 depending on the barrel caliber, and the ratio (L/Dp) of the pitch "L" of the helical rifling to the average diameter (Dp) of the lands (5) is comprised between 20 and 60 depending on the barrel caliber.

4. A barrel according to any preceding claims, **characterized in that** the ratio (Dp/rp) of the average diameter (Dp) to the radius (rp) of said lands (5) is comprised between 2 and 28 depending on the barrel caliber.

5. A barrel according to any preceding claims, **characterized in that** the muzzle end (8) of said barrel (1) is circumferentially profiled and extends from the inner diameter (Dp) of the said lands (5) to the outer maximum diameter (Dv) of the grooves (3).

6. A barrel according to any preceding claims, **characterized in that** in the area of the first cone (9) of the combustion chamber (Cc) a circumferential merging (rc) is provided between the cone base and the average diameter (Dp) of said lands (5).

7. A process for manufacturing a barrel according to any claim 1 to 6, comprising the steps of:
- producing a bar of a high quality alloy steel already hardened and tempered, through rolling or forging, with a diameter and a length depending on the barrel model and caliber;
- drilling said steel bar with a through hole having an inner diameter (Di) substantially equal to the maximum diameter of combustion chamber (Cc);
- boring with thrust the inner diameter (Di) of the hole so as to obtain a plurality of longitudinal helical rifling lands (5) and grooves (3), the cross section profiles of both said lands and grooves being arcuated and the side end parts of said lands (5) and grooves (3) being tangentially smoothly connected to each other by arcuated portions formed as circumference arcs of a given curvature radius (rv);
- dry external turning the steel bar by using a N.C. lathe with inserts of hard metal or carbides;
- cold hammering of the core, of the steel bar and of the combustion chamber by using hammering machines with hammers of hard metal suitable for compression and forming pin in hard metal, depending on the barrel type and caliber.

8. A process for manufacturing a barrel according to claim 7, **characterized in that** said boring with thrust is an ogive shape boring carried out by using horizontal broaching machines with ogives of "Ferro-Tic" (Tic-iron) or of hard metal, for barrels having a diameter between 5.50 and 12 mm.

9. A process for manufacturing a barrel according to claim 7, **characterized in that** said boring with thrust is carried out by using a numerical control drilling equipment (N.C.) with carbide inserts, for barrels having a diameter larger than 12 mm up to 120 mm.

10. A process according to claim 8 or 9, **characterized in that** a heat treatment for stress relieving the cold hammered steel bar is carried out by heating the bar to a temperature of about 550 - 650°C, in inert atmosphere, for at least 4 hours and slow cooling it in an oven, and **in that** the steel used for production of the steel bar is an alloy steel in a hardened and tempered condition having a good malleability and suitable to be cold formed/hammered.

11. A process according to claim 8 or 9, **characterized in that**:
said drilling of the steel bar is carried out using a numerical control drilling machines using tools having hard metal inserts and forced lubrication at about 40 - 80 bar;
said ogive shaped boring with thrust is carried out in a horizontal broaching machines with tools of "Ferro-Tic" or hard metal and with a pushing rod, and that the tool for ogive shape boring with thrust (ogive) has a forming angle (à) and a length (L2) of the boring diameter variable as a function of the hardness of used steel.

## Patentansprüche

1. Schusswaffenlauf oder Abschussvorrichtung mit mehreren in Längsrichtung schraubenförmig verlaufenden Zugfelder (5) und Rillen (3), wobei sowohl der Felder als auch der Rillen bogenförmige Querschnittsprofile haben, **dadurch gekennzeichnet, dass** sich die seitlichen Endabschnitte der Felder (5) und der Rillen (3) mit einen bestimmten Übergangsradius (rv) aufweisenden kreisbögenförmigen Abschnitten aneinander anschliessen.

2. Lauf nach Anspruch 1, **dadurch gekennzeichnet, dass** das Verhältnis (Dv/Dp) des Flankendurchmessers (Dv) der Rillen (3) zum Flankendurchmessers (Dp) der Felder (5) mehr als 1 beträgt und zwischen 1,01 und 1,04 liegt.

3. Lauf nach einem der vorstehenden Ansprüche, **dadurch gekennzeichnet, dass** das Verhältnis (Dv/Lr) des Flankendurchmessers (Dv) zur Breite (Lr) der Rillen (3) je nach dem Kaliber des Laufes zwischen 3 und 1 liegt und dass das Verhältnis (L/Dp) der Steigung "L" des schraubenförmig verlaufenden Zuges zum Flankendurchmessers (Dp) der Felder (5) je nach dem Kaliber des Laufes zwischen 20 und 60 liegt.

4. Lauf nach einem der vorstehenden Ansprüche, **dadurch gekennzeichnet, dass** das Verhältnis (Dp/rp) des Flankendurchmessers (Dp) zum Radius (rp) der Felder (5) je nach dem Kaliber des Laufes zwischen 2 und 28 liegt.

5. Lauf nach einem der vorstehenden Ansprüche, **dadurch gekennzeichnet, dass** die Mündung (8) des Laufes (1) umfangsprofiliert ist und sich vom Innendurchmesser (Dp) der Felder (5) bis zum grössten Aussendurchmesser (Dv) der Rillen (3) erstreckt.

6. Lauf nach einem der vorstehenden Ansprüche, **dadurch gekennzeichnet, dass** im Bereich des ersten Kegels (9) der Brennkammer (Cc) ein umfangsgeschlossener Übergang zwischen der Kegelbasis und dem Flankendurchmesser (Dp) der Felder (5) vorgesehen ist.

7. Verfahren zur Herstellung eines Schusswaffenlaufes nach einem der vorstehenden Ansprüche 1 bis 6, durch folgende Verfahrensschritte **gekennzeichnet**:
- Herstellung einer gewalzten oder geschmiedeten Stange aus bereits gehärtetem und vergütetem Edelstahl mit vom Modell und Kaliber des Laufes abhängigen Durchmesser- und Längenmassen,
- Bohren der Stahlstange, deren durchgehende Bohrung einen Durchmesser (Di) aufweist, der im wesentlichen dem grössten Durchmesser der Brennkammer (Cc) entspricht,
- Stossbohen der Bohrung mit Durchmesser (Di), um mehrere in Längsrichtung schraubenförmig verlaufende Zugfelder (5) und Rillen (3) herzustellen, wobei die Querschnittsprofile sowohl der Felder als auch der Rillen bogenförmig verlaufen und sich die seitlichen Endabschnitte der Felder (5) und der Rillen (3) mit einen bestimmten Übergangsradius (rv) aufweisenden kreisbögenförmigen Abschnitten aneinander anschliessen,
- Trockenaussendrehen der Stahlstange durch Anwendung einer numerisch gesteuerten Drehbank mit Hartmetallplättchen,
- Kalthämmern des Kerns, der Stahlstange und der Brennkammer durch Anwendung von Hammermaschinen mit zum Pressen geeigneten Hartmetallhammern und Formstift aus Hartmetall, in Abhängigkeit vom Typ und vom Kaliber des Laufes.

8. Verfahren zur Herstellung eines Laufes nach Anspruch 7, **dadurch gekennzeichnet, dass** es sich beim Stossbohren um ein Geschosspitzen-Formbohren handelt, das durch Anwendung einer Waagerechträummaschine mit Spitzen aus "Ferro-Tic" (Tic-Eisen) oder aus Hartmetall für Läufe mit 5,50 bis 12 mm Durchmesser ausgeführt wird.

9. Verfahren zur Herstellung eines Laufes nach Anspruch 7, **dadurch gekennzeichnet, dass** das stossbohren mit einer numerisch gesteuerten (N.C.)-Bohrmaschine mit Hartmetallplättchen für Läufe mit von mehr als 12 mm bis zu 120 mm Durchmesser ausgeführt wird.

10. Verfahren nach Anspruch 8 oder 9, **dadurch gekennzeichnet, dass** ein Entspannungsglühen der kaltgehämmerten Stahlstange dadurch vorgenommen wird, dass die Stange mindestens 4 Stunden lang bei einer Temperatur von 550°C-650°C in Schutzatmosphäre erwärmt und dann in einem Ofen langsam abgekühlt wird und dass es sich bei dem zur Herstellung der Stange benutzten Stahl um einen gehärteten und vergüteten Edelstahl mit guter Streckbarkeit handelt, der kaltverformar bzw. kalthämmerbar ist.

11. Verfahren nach Anspruch 8 oder 9, **dadurch gekennzeichnet, dass**
- das Bohren der Stahlstange durch Anwendung einer numerisch gesteuerten Bohrmaschine ausgeführt wird, wobei die Werkzeuge mit Hartmetallplättchen bestückt sind und die Maschine mit Zwangsschmierung bei 40 - 80 bar arbeitet,
- das Stossbohren zur Geschosspitzen-Formgebung mit einer Waagerechträummaschine mit Werkzeugen aus "Ferro-Tic" oder Hartmetall und mit einem Stössel ausgeführt wird und dass das Werkzeug zum Geschosspitzen-Formbohren (Spitze) einen Verformungswinkel (α) und eine Länge (L2) des Bohrdurchmesser hat, die in Abhängigkeit von der Härte des benutzten Stahls veränderbar sind.

## Revendications

1. Tube de canon pour arme à feu ou appareil de lancement pourvu d'une pluralité de rayures longitudinales hélicoïdales en relief (5) et creuses (3), les profils de la section transversale desdites rayures en relief ainsi que desdites rayures creuses étant arqués, **caractérisé en ce que** les extrémités latérales desdites rayures en relief (5) et creuses (3) sont raccordées l'une à l'autre tangentiellement d'une façon souple par portions arquées en forme d'arcs de circonférence d'un rayon de courbure donné (rv).

2. Tube de canon selon la revendication 1, **caractérisé en ce que** le rapport (Dv/Dp) entre le diamètre moyen (Dv) desdites rayures creuses (3) et le diamètre moyen (Dp) desdites rayures en relief (5) est plus grand que 1 et compris entre 1.01 et 1.04.

3. Tube de canon selon l'une des revendications précédentes, **caractérisé en ce que** le rapport (Dv/Lr) entre le diamètre moyen (Dv) et la largeur (Lr) desdites rayures creuses (3) est compris entre 3 et 1, en fonction du calibre du tube de canon, et le rapport (L/Dp) entre le pas "L" de la rayure hélicoïdale et le diamètre moyen (Dp) des rayures en relief (5) est compris entre 20 et 60, en fonction du calibre du tube de canon.

4. Tube de canon selon l'une des revendications précédentes, **caractérisé en ce que** le rapport (Dp/rp) entre le diamètre moyen (Dp) et le rayon (rp) desdites rayures en relief (5) est compris entre 2 et 28, en fonction du calibre du tube de canon.

5. Tube de canon selon l'une des revendications précédentes, **caractérisé en ce que** la bouche (8) dudit tube de canon (1) est profilée circonférenciellement et s'étale du diamètre interne (Dp) desdites rayures en relief au diamètre externe maximum desdites rayures creuses (3).

6. Tube de canon selon l'une de revendications précédentes, **caractérisé en ce que** dans l'aire du premier cône de la chambre de combustion un raccord circonférentiel (rc) est prévu entre la base du cône et le diamètre moyen (Dp) desdites rayures en relief (5).

7. Méthode pour réaliser un tube de canon selon l'une des revendications 1 à 6, comprenante les phases de:
- production d'une barre d'acier allié de qualité élevée, déjà durci et trempé, par laminage ou forgeage, de diamètre et longueur dépendants du modèle et du calibre du tube de canon;
- perçage de la susdite barre avec un trou passant ayant un diamètre interne (Di) substantiellement égal au diamètre maximum de la chambre de combustion (Cc);
- alésage à poussée du diamètre interne (Di) du trou de façon à obtenir une pluralité de rayures en relief (5) et creuses (3) longitudinales hélicoïdales, les profiles de la section transversale desdites rayures en relief et creuses étant arqués et les extrémités latérales desdites rayures en relief (5) et creuses (3) étant reliées l'une à l'autre tangentiellement d'une façon souple par portions arquées en forme d'arcs de circonférence d'un rayon de courbure donné (rv);
- tournage à sec externe de la barre, en utilisant un tour contrôlé numériquement (N.C.) pourvu d'inserts en métal dur ou en carbures;
- martelage à froid du noyau, de la barre d'acier et de la chambre de combustion en utilisant marteleurs ayant marteaux en métal dur aptes pour la compression et broche de moulage en métal dur, en fonction du type et du calibre du tube de canon.

8. Méthode pour réaliser un tube de canon selon la revendication 7, **caractérisée en ce que** ledit alésage à poussée est un alésage en forme d'ogive effectué en utilisant machines à brocher avec ogives en «Ferro-Tic» (fer-Tic) ou de métal dur, pour tubes de canon de diamètre entre 5,50 et 12 mm.

9. Méthode pour réaliser un tube de canon selon la revendication 7, **caractérisée en ce que** ledit alésage à poussée est effectué en utilisant un équipement de perçage contrôlé numériquement (N.C.) ayant inserts en carbures, pour tubes de canon de diamètre supérieur à 12 mm jusqu'à 120 mm.

10. Méthode selon la revendication 8 ou 9, **caractérisée en ce que** un traitement thermique de détente de la barre d'acier martelée à froid est effectué en chauffant ladite barre à une température de environ 550 - 650 °C, en atmosphère inerte, pendant au moins 4 heures et en la refroidissant lentement dans un four, et **en ce que** l'acier utilisé pour la production de ladite barre d'acier est un acier allié dans une condition durcie et trempée ayant une bonne malléabilité et étant susceptible d'être formé/martelé à froid.

11. Méthode selon la revendication 8 ou 9, **caractérisée en ce que**:
ledit perçage de la barre d'acier est effectué en utilisant une perceuse à contrôle numérique utilisant des outils ayant inserts en métal dur et graissage forcé à 40 -80 bar;
ledit alésage en forme d'ogive avec poussée est effectué dans une machine à brocher horizontale avec outils en «Ferro-Tic» ou métal dur et avec une tige poussante, et **en ce que** l'outil pour l'alésage en forme d'ogive avec poussée (ogive) a un angle de modelage (α) et une longueur (L2) du diamètre d'alésage variable en fonction de la dureté de l'acier utilisé.
